# EUROPÄISCHE PATENTSCHRIFT

(11) **EP 2 458 471 B1**
(45) Veröffentlichungstag und Bekanntmachung des Hinweises auf die Patenterteilung: **04.06.2014**
(21) Anmeldenummer: 12155861.3
(22) Anmeldetag: 20.08.2008
(51) Int. Cl.: G05D 23/01, G05D 23/02, E03C 1/044, G05D 23/10, E03B 7/12, E03B 7/10, F24D 19/10, F16K 31/00

(54) **Thermostatische Regeleinrichtung zur Regelung eines Massenstromes**
Thermostatic control device for controlling a mass flow
Dispositif thermostatique pour le réglage d'un flux de matière

(30) Priorität: 21.08.2007 DE 102007039495; 28.02.2008 DE 102008011529; 08.05.2008 DE 102008022886
(43) Veröffentlichungstag der Anmeldung: 30.05.2012
(62) Teilanmeldung aus: 08801628.2
(73) Patentinhaber: Otto Egelhof GmbH & Co. KG, 70736 Fellbach (DE)
(72) Erfinder: Sohn, Jürgen, 73732 Esslingen (DE)
(74) Vertreter: Maser, Jochen

(56) Entgegenhaltungen:
- EP-A2- 0 304 944
- EP-A2- 0 735 450
- US-A- 4 522 219
- US-A- 4 523 605
- US-A- 4 932 429
- US-A- 2006 016 902
- US-A1- 2006 174 940
- US-B1- 6 427 712

## Beschreibung

Die Erfindung betrifft eine thermostatische Regeleinrichtung zur Regelung eines Massenstromes.

In mit Flüssigkeit befüllten Behältnissen, Tanks oder dergleichen besteht grundsätzlich die Gefahr, dass beim Abfall der Temperatur unter den Gefrierpunkt Frostschäden auftreten. Deshalb steigt nicht nur die Zahl der Anwendungsfälle für thermostatische Regeleinrichtungen als Frostschutz, sondern auch die Anforderungen an die Funktionsfähigkeit.

Aus der US 4,523,605 ist ein Frostschutzventil bekannt, welches in einem Gehäuse angeordnet ist, das einem Rohrabschnitt einer Leitung zugeordnet ist. Dieses Frostschutzventil umfasst ein Ventilelement, welches eine Öffnung mit einem Ventilsitz schließt. An dem Ventilelement greifen ein thermisches Stellelement aus einer Formgedächtnisiegierung sowie ein weiteres Kraftspeicherelement an, welches in entgegengesetzter Richtung zum thermischen Stellglied wirkt. Sofern die Temperatur unter den Gefrierpunkt sinkt, nimmt die Federkraft des thermischen Stellglieds ab, so dass die Federkraft des Kraftspeicherelementes überwiegt und das Ventilschließglied vom Ventilsitz abgehoben wird. Sobald sich die Temperatur erhöht, erfolgt ein Schließen des Ventilelementes. Solche Ventilelemente sind träge.

Der Erfindung liegt die Aufgabe zugrunde, eine thermostatische Regeleinrichtung zur Regelung eines Massenstromes vorzuschlagen, welches ein schnelles und sicheres Schalten in verschiedenen Anwendungsbereichen ermöglicht.

Diese Aufgabe wird erfindungsgemäß durch eine thermostatische Regeleinrichtung gemäß den Merkmalen des Anspruchs 1 gelöst.

Durch die erfindungsgemäße thermostatische Regeleinrichtung zur Regelung eines Massenstromes werden zumindest eine, insbesondere zwei, Sicherheitsfunktionen ermöglicht. Bei der Ausgestaltung einer thermostatischen Regeleinrichtung, bei der ein Ventilelement eine Querbohrung eines Rohrabschnittes schließt, kann durch den Einsatz des Ventilelementes sowohl eine Frostschutzsicherung als auch eine Überdrucksicherung realisiert werden. Sobald eine Umgebungstemperatur unterhalb eines Gefrierpunktes absinkt, wird dieser Abfall der Temperatur durch das thermische Stellglied erfasst, wodurch das Ventilschließglied des Ventilelementes die Querbohrung in dem Rohrabschnitt der Leitungsanordnung öffnet, so dass das noch nicht gefrorene Medium, insbesondere Wasser, aus der Leitungsanordnung abfließen kann. Alternativ sieht die erfindungsgemäße thermostatische Regeleinrichtung vor, dass das Ventilelement zur Frostschutzsicherung an der Ablauföffnung angreift, welche zwischen einem Zulauf und einem Ablauf in einer Leitungsanordnung liegt. Somit ist die Frostschutzsicherung gegeben. Bei einem auftretenden Überdruck in der Leitungsanordnung, beispielsweise bei kochendem Wasser, kann der Überdruck das Ventilelement abheben, so dass die Querbohrung des Rohrabschnittes der Leitungsanordnung freigegeben wird, so dass über diese Querbohrung wiederum ein Druckabfall erzielt werden kann.

Bei der erfindungsgemäßen thermostatischen Regeleinrichtung ist vorgesehen, dass an dem das Kraftspeicherelement aufnehmenden Gehäuseabschnitt ein Stellelement angreift, welches mit dem Kraftspeicherelement in Wirkverbindung steht und als Schnappfederelement ausgebildet ist. Dieses Stellelement weist zwei definierte Endlagen oder Hubstellungen auf. Es kann dadurch eine konstruktiv einfache und temperaturunempfindliche Anordnung geschaffen sein, um die Einnahme der beiden Endlagen zu ermöglichen. Dabei kann die eine Endlage eine Schließstellung des Ventilelementes zur Ablassöffnung umfassen. In der zweiten Endlage des Stellelementes kann das Ventilelement gegenüber der Ablassöffnung abgehoben sein, so dass das Medium abströmen kann. Des Weiteren ist eine Auslegung von solchen Schnappfederelementen sehr präzise an die Einsatzfälle möglich. Der Wechsel zwischen der ersten und zweiten Endlage und umgekehrt erfolgt schlagartig, so dass ein schnelles und vollständiges Öffnen des Ventilelementes gegenüber der Ablassöffnung oder Querbohrung ermöglicht ist. Dadurch kann beim Einsatz zur Frostschutzsicherung das Zufrieren eines schmalen Öffnungsspaltes vermieden werden.

Eine weitere bevorzugte Ausgestaltung eines Temperaturregelventils sieht ebenfalls die Realisierung von zumindest einer Sicherheitsfunktion vor. Diese thermostatische Regeleinrichtung, welche bezüglich einer Querbohrung im Rohrabschnitt einer Leitungsanordnung und einem dazu angeordneten Gehäuse analog zur vorstehenden thermostatischen Regeleinrichtung aufgebaut ist, kann in einer ersten Alternative ein Ventilelement aufnehmen, welches die Querbohrung öffnet und schließt. In einer weiteren Alternative weicht die Anordnung des Ventilelementes lediglich dahingehend ab, dass das Ventilelement eine Ablassöffnung im Gehäuse öffnet und schließt. Dadurch liegen im Innenraum des Gehäuses der Druck und die Temperatur des Mediums in der Leitungsanordnung vor. Sobald jedoch die Temperatur unterhalb des Gefrierpunktes abfällt, wird dieser Temperaturabfall vom thermischen Stellglied erfasst, und das Ventilelement öffnet die Ablassöffnung im Gehäuse, um ein Abfließen des Mediums zu ermöglichen. Bei dieser Ausführungsform ist bevorzugt vorgesehen, dass der das Kraftspeicherelement aufnehmende Gehäuseabschnitt an einem Ende eine Druckmembran aufweist. Dadurch kann ein Überdruck erfasst und ein Öffnen des Ventilelementes angesteuert werden, um den Überdruck über die Ablassöffnung abströmen zu lassen, und somit eine weitere Sicherheitsfunktion realisiert werden.

Nach einer bevorzugten Ausgestaltung der Erfindung ist an einem dem Ventilsitz gegenüberliegenden Ende des Übertragungsstiftes eine Betätigungsvorrichtung anbringbar. Diese Betätigungsvorrichtung kann beispielsweise eine Temperaturregeleinrichtung mit einem Temperaturfühler sein, die durch ein Kapillarrohr miteinander verbunden sind. Entsprechend der erfassten Temperatur durch den Temperaturfühler wird eine Stellbewegung bewirkt, die die Temperaturregeleinrichtung auf den Übertragungsstift überträgt und somit die Öffnungs- und Schließposition des Ventilschließgliedes in Abhängigkeit der erfassten Temperatur bestimmt wird. Ebenfalls kann auch ein Thermokopf mit einer Gasfüllung vorgesehen sein.

Das Ventilelement weist gemäß einer bevorzugten Ausführungsform in dem Gehäuseabschnitt eine Kammer auf, welche von dem Übertragungsstift durchquert ist. In der Kammer ist bevorzugt ein Kraftspeicherelement vorgesehen, welches mit einem Ende an einem Kammerboden anliegt und mit dem gegenüberliegenden Ende am Übertragungsstift sich abstützt. Dadurch wird der Übertragungsstift und somit das Ventilschließglied in einer Ausgangslage gehalten. Diese Ausgangslage kann durch eine Einstellung der Betätigungsvorrichtung überlagert sein, welche durch eine Voreinstellung des Benutzers erfolgt. Dadurch kann in der Ausgangslage ein konstanter Drosselquerschnitt freigegeben sein. Sobald die Temperatur des zu regelnden Massenstromes über einen Grenzwert ansteigt, wird über das thermische Stellglied eine Stellbewegung eingeleitet, wodurch das Ventilelement durch das Ventilschließglied einen Ventilsitz schließt oder die Durchflussmenge des Massenstroms reduziert.

Nach einer weiteren bevorzugten Ausführungsform der Erfindung ist der Gehäuseabschnitt zumindest zweiteilig ausgebildet. Dadurch wird eine einfache Montage des Übertragungsstiftes und dem zumindest einen in der Kammer des Gehäuseabschnitts angeordneten Kraftspeicherelementes ermöglicht. Bevorzugt ist zwischen dem ersten und zweiten Teil des Gehäuseabschnitts eine Schraubverbindung oder lösbare Klemmverbindung vorgesehen. Alternativ kann auch eine unlösbare Verbindung durch einen Presssitz, eine Klemmung oder eine Rastverbindung vorgesehen sein.

Der Gehäuseabschnitt des Ventilelementes weist bevorzugt Führungsöffnungen zur verschiebbaren Aufnahme des Übertragungsstiftes auf, wobei die Führungen vorzugsweise zumindest ein Dichtungs- oder Gleitelement umfassen. Dadurch wird eine leichtgängige Anordnung und Führung des Übertragungsstiftes zum Gehäuseabschnitt ermöglicht. Gleichzeitig wird verhindert, dass der zu regelnde Massenstrom in die Kammer des Gehäuseabschnitts eintritt, insbesondere das in der jeweiligen Führungsöffnung angeordnete Führungselement gleichzeitig auch eine Dichtfunktion übernimmt.

Des Weiteren ist bevorzugt auf dem Gehäuseabschnitt eine Einstellhülse vorgesehen, welche in axialer Richtung zum Gehäuseabschnitt einstellbar ist. Dadurch kann beim Einbau des Ventilelementes in die thermostatische Regeleinrichtung eine Voreinstellung des Ventilelementes zum Ventilsitz zur Drosselung eines Massenstromes erfolgen, so dass beispielsweise ein hydraulischer Ausgleich im Heizungssystem ermöglicht ist. Darüber hinaus kann eine Feinjustierung und exakte Einstellung des Ventilelementes zur Einstellung der thermostatischen Regeleinrichtung vorgesehen sein. Ein solches Ventilelement kann in einer thermostatischen Regeleinrichtung mit einem Thermostatventil zum Einsatz gelangen, welche zur Frostschutzregelung vorgesehen ist.

Das Ventilelement bildet bevorzugt eine Baueinheit, die als Einbaupatrone ausgebildet ist. Diese Einbaupatrone umfasst den Gehäuseabschnitt, das Ventilschließglied, den Übertragungsstift, das in dem Gehäuseabschnitt angeordnete Kraftspeicherelement sowie das thermische Stellglied. Somit kann eine solche Einbaupatrone in einfacher Weise an einem Anschlusselement einer thermostatischen Regeleinrichtung befestigt werden, beispielsweise über ein an einen Außenumfang des Gehäuseabschnitts vorgesehenes Gewinde, wodurch bevorzugt auch eine stufenlose Voreinstellung ermöglicht ist. Die Ausgestaltung des Ventilelementes als Einbaupatrone weist des Weiteren den Vorteil auf, dass bestehende thermostatische Regeleinrichtungen nachgerüstet und auch umgerüstet werden können, so dass eine Anpassung an den jeweiligen Regelungsbedarf in Abhängigkeit der Umrüstung oder des Austauschers gegeben ist.

Nach einer weiteren bevorzugten Ausgestaltung der Erfindung ist ein an dem Übertragungsstift oder dem Ventilschließglied angeordnetes Spannelement lösbar zum Übertragungsstift oder Ventilelement vorgesehen. Dieses Spannelement dient zur Positionierung des thermischen Stellgliedes zwischen dem Gehäuseabschnitt und dem Ventilschließglied, um eine Stellbewegung des Ventilschließgliedes in Abhängigkeit der erfassten Temperatur des anliegenden Massenstromes zu ermöglichen. Durch die lösbare Anordnung des Spannelementes kann das Ventilelement in einfacher Weise auf ein herkömmliches Ventilelement umgerüstet werden, indem das Spannelement von dem Übertragungsstift oder Ventilschließglied entfernt und anschließend das thermische Stellglied abgenommen wird. Somit ist das Ventilelement in einfacher Weise auf verschiedene Anwendungen anpassbar.

Des Weiteren ist bevorzugt am Übertragungsstift zwischen dem Gehäuseabschnitt und dem Ventilschließglied ein Spannelement vorgesehen, an dem das thermische Stellglied anliegt und das Spannelement in axialer Richtung entlang des Übertragungsstifts im Abstand zum Ventilschließglied einstellbar ist. Dadurch kann eine Vorspannung auf das thermische Stellglied aufgebracht werden, so dass ein vorbestimmter Arbeitspunkt oder Schaltzeitpunkt eingestellt werden kann. Dies bedeutet, dass eine Ausdehnungsbewegung des thermischen Stellgliedes beziehungsweise eine Stellbewegung des thermischen Stellgliedes erst ab einer vorbestimmten Temperatur des Massenstromes erfolgt. Diese Voreinstellung wird bevorzugt auf die Rückstellkraft des Kraftspeicherelementes abgestimmt, um ein gewünschtes Regelverhalten zu erzielen.

Nach einer weiteren vorteilhaften Ausgestaltung des Stellelementes als Schnappfederelement ist vorgesehen, dass die Federkraft oder Stellkraft des Stellelementes derart eingestellt ist, dass bei einer Umgebungstemperatur von weniger als 4 °C durch das Kraftspeicherelement eine Endlage vorgesehen ist, in der das Ventilelement die Ablassöffnung öffnet, bei einer Umgebungstemperatur von mehr als 4 °C das thermische Stellglied das Ventilelement in eine weitere Endlage überführt und die Ablassöffnung schließt. Dadurch ist ein Frostschutzregelventil geschaffen, welches ein schnelles Öffnen und Schließen in Abhängigkeit der Umgebungstemperatur bzw. der Wassertemperatur ermöglicht.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine schematische Seitenansicht eines Ventilelements für eine erfindungsgemäße thermostatische Regeleinrichtung,
Figur 2 eine alternative Ausführungsform des Ventilelementes zu Figur 1,
Figur 3 eine schematische Ansicht von oben auf eine erste Ausführungsform der thermostatischen Regeleinrichtung mit dem Ventilelement,
Figur 4 eine schematische Seitenansicht der thermostatischen Regeleinrichtung gemäß Figur 3,
Figur 5 eine schematische Seitenansicht einer alternativen Ausführungsform der thermostatischen Regeleinrichtung zu Figur 4 und
Figur 6 eine schematische Seitenansicht einer weiteren alternativen Ausführungsform der thermostatischen Regeleinrichtung zu Figur 4.

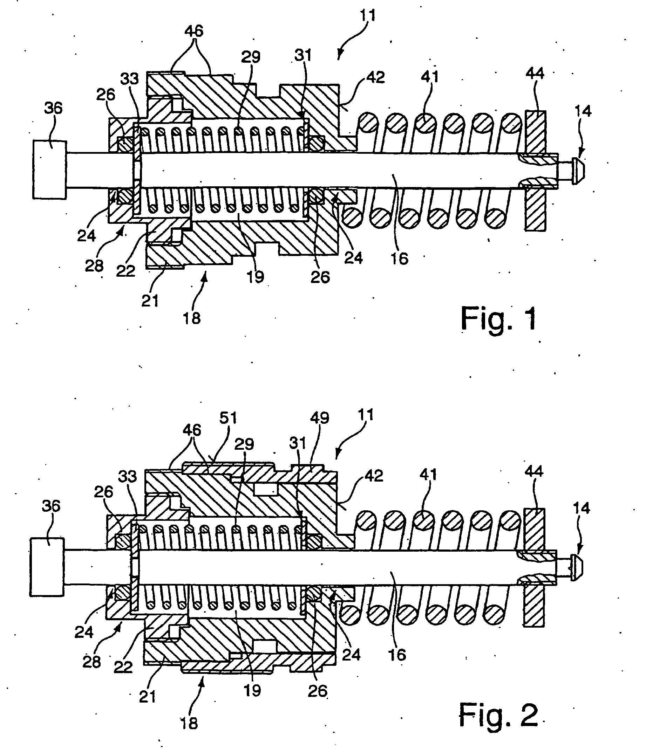

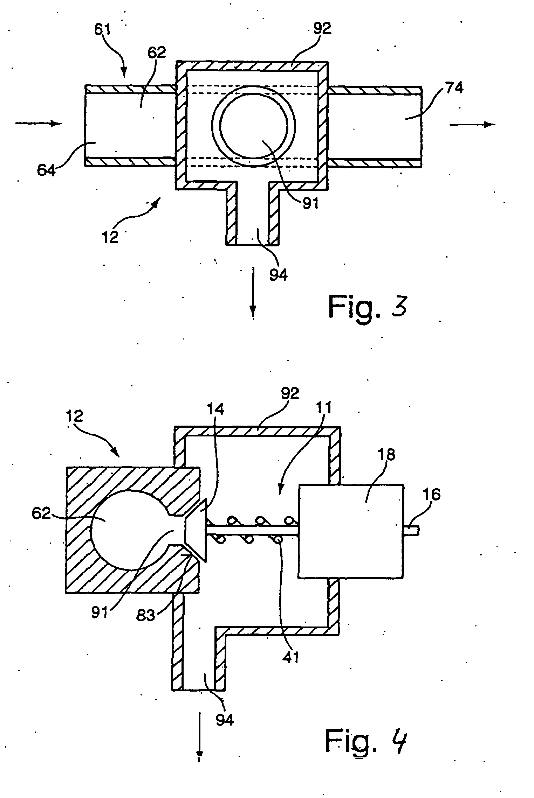

In Figur 1 ist eine schematische Schnittdarstellung eines Ventilelementes 11 dargestellt. Dieses Ventilelement 11 ist bevorzugt als Einbaupatrone ausgebildet und für den Einsatz in thermostatischen Regeleinrichtungen 12 vorgesehen, welche bzgl. deren Einbauort in Figur 3 und bzgl. deren Aufbau beispielhaft in den Figuren 4a bis c näher dargestellt und beschrieben wird.

Das Ventilelement 11 umfasst ein Ventilschließglied 14, welches relativ zu einem Ventilsitz in der thermostatischen Regeleinrichtung 12 zur Regelung eines Massenstromes bewegbar ist. Das Ventilschließglied 14 umfasst bspw. ein Übertragungsstift 16, der durch einen Gehäuseabschnitt 18 axial verschiebbar geführt ist. Bevorzugt durchdringt der Übertragungsstift 16 eine Kammer 19 im Gehäuseabschnitt 18 und wird auf der gegenüberliegenden Seite aus dem Gehäuseabschnitt 18 herausgeführt. Der Gehäuseabschnitt 18 weist ein erstes bevorzugt U-förmig ausgebildetes Teil 21 und ein zweites Teil 22 auf, welche durch eine lösbare Verbindung, insbesondere eine Schraubverbindung, zueinander befestigt sind. Alternativ kann auch eine unlösbare Verbindung, wie beispielsweise ein Presssitz oder eine Rastverbindung, vorgesehen sein. Im ersten Teil 21 ist eine Führungsöffnung 24 vorgesehen, die einer Führungsöffnung 24 im zweiten Teil gegenüberliegt. Die Führungsöffnungen 24 nehmen bevorzugt ein Dichtungs- und/oder Führungselement 26 auf, um den Übertragungsstift 16 leichtgängig zu führen und bevorzugt die Kammer 19 abzudichten.

Zur Anordnung des Ventilschließgliedes 14 in einer Ausgangslage 28 ist in der Kammer 19 ein Kraftspeicherelement 29, insbesondere eine Druckfeder, vorgesehen. Diese liegt mit ihrem einen Ende an einem Kammerboden 31 an, der bspw. als Lochscheibe ausgebildet ist und sich an einer Schulter des Teils 21 abstützt. Alternativ kann sich das Kraftspeicherelement 29 auch unmittelbar am Teil 21 abstützen. Gegenüberliegend ist ein Anschlag 33 vorgesehen, der an dem Übertragungsstift 16 angreift. Bspw. ist dieser Anschlag 33 in einer U-förmigen Vertiefung des Übertragungsstiftes 16 fixiert und als Scheibe ausgebildet. Ebenso kann ein Stift quer zum Übertragungsstift 16 eingebracht sein, um als Anschlag 33 zu dienen. Des Weiteren kann alternativ vorgesehen sein, dass der Übertragungsstift 16 einen einstückig daran angeformten oder aufgepressten Anschlag 33 umfasst. Des Weiteren liegt der Anschlag 33 an dem Teil 22 an, wodurch die eine Bewegungsrichtung des Ventilschließgliedes 14, die durch das Kraftspeicherelement 29 erzeugt wird, begrenzt ist.

An einem dem Ventilschließglied 14 gegenüberliegenden Ende des Übertragungsstiftes 16 greift eine nur schematisch dargestellte Betätigungsvorrichtung 36 an, welche bspw. als Temperaturregeleinrichtung ausgebildet ist. Dies kann ein Thermokopf als auch ein Temperaturfühler sein, der mit einem Temperaturregler eine Hubbewegung des Übertragungsstiftes 16 ansteuert.

Außerhalb des Gehäuseabschnittes 18 und bevorzugt den Übertragungsstift 16 umgebend ist ein thermisches Stellglied 41 vorgesehen, welches sich an einem Ende an einer Abstützfläche 42 des Gehäuseabschnittes 18 abstützt und gegenüberliegend an einem Spannelement 44, welches am Übertragungsstift 16 lösbar befestigt ist. Dieses Spannelement 44 kann alternativ auch an dem Ventilschließglied 14 lösbar befestigt sein, so dass nach dem Abnehmen des Spannelementes 44 von dem Übertragungsstift 16 oder dem Ventilschließglied 14 ein Herausnehmen des thermischen Stellgliedes 41 als auch ein Austausch des thermischen Stellgliedes 41 ermöglicht ist.

Durch die Einstellung eines Abstandes zwischen der Spannplatte 44 und dem Ventilschließglied 14 bzw. der Abstützfläche 42 des Gehäuseabschnitts 18 wird das thermische Stellglied 41 vorgespannt, so dass deren Arbeitspunkt erst ab einer vorbestimmten Temperatur beginnt.

Das thermostatische Stellglied 41 ist aus einer sogenannten Formgedächtnislegierung hergestellt. Solche Formgedächtnislegierungen, die auch als SMA-Legierungen (shape memory alloy) bezeichnet werden, bestehen bspw. aus einer TiNi-Legierung, aus einer Legierung auf Cu-basis, Fe-Basis oder aus einem Memory-Kunststoff. Solche Formgedächtnislegierungen ermöglichen ab einem bestimmten Temperaturwert eine Stellbewegung. Solche Formgedächtnislegierungen ändern ihren Aggregatzustand im Vergleich zu Wachsdehnelementen nicht. Dadurch ist eine schnelle Reaktionszeit gegeben. Darüber hinaus weisen solche Formgedächtnislegierung den Vorteil auf, dass hohe Schließkräfte bewirkt werden können, so dass auch ab einem vorbestimmbaren Temperaturwert das thermische Stellglied 41 eine Rückstellkraft des Kraftspeicherelementes 29 überwindet, welches das Ventilschließglied 14 in einer Ausgangslage 28 anordnet, sofern ein bestimmter Temperaturwert nicht erreicht ist und das thermische Stellglied 41 inaktiv ist. Durch die Anordnung gemäß dem Ausführungsbeispiel ist bevorzugt ein platzsparender Aufbau gegeben.

Der Gehäuseabschnitt 18 weist an seinem Außenumfang, insbesondere am ersten Teil 21, einen Gewindeabschnitt 46 oder einen Befestigungsabschnitt auf, um das Ventilelement 11 in einer Einbaulage zum Ventilsitz zu fixieren.

In Figur 2 ist eine vorteilhafte Weiterbildung des Ventilelementes 11 gemäß Figur 1 dargestellt. Im Hinblick auf die übereinstimmenden Merkmale wird auf Figur 1 Bezug genommen. Bei dieser Ausführungsform ist zusätzlich vorgesehen, dass der Gehäuseabschnitt 18, insbesondere das Teil 21, durch eine Einstellhülse 49 zumindest abschnittsweise umgeben ist. Diese Einstellhülse 49 greift bevorzugt an dem Gewindeabschnitt 46 an und ist dadurch in seiner axialen Position gegenüber dem Gehäuseabschnitt 18 veränderbar. Ein Außenumfang der Einstellhülse 49 weist wiederum einen Gewindeabschnitt 51 oder einen Befestigungsabschnitt auf, um das Ventilelement 11 in der thermostatischen Regeleinrichtung 12 zu fixieren. Durch diese Einstellhülse 49 kann ein hydraulischer Abgleich eingestellt werden, in dem bspw. das Ventilelement 11 derart positioniert wird, dass bei der Anordnung des Ventilschließgliedes 14 in einer Ausgangslage 28 ein konstanter Durchflussquerschnitt für einen Massenstrom durch den Ventilsitz hindurch freigegeben ist.

Der Einsatz der erfindungsgemäßen thermostatischen Regeleinrichtungen 12 sowie das Ventilelement 11 kann zum Frostschutz in verschiedenen Anwendungsbereichen eingesetzt werden. Bspw. kann die Regeleinrichtung 12 als Frostschutz in Waschwasserbehälter für Kraftfahrzeuge oder in Wassertanks, insbesondere Frischwassertanks, vorgesehen sein. Solche Frischwassertanks können bspw. bei der Tierhaltung Einsatz finden, so dass nicht nur ein Frostschutz in den Wassertanks sondern auch bei Tiertränken auf der Weide oder in Ställen vorgesehen ist. Bspw. kann der Frostschutz auch bei Pferdetränken gegeben sein, welche in jeder Box für ein Pferd oder für mehrere Pferde vorgesehen sind.

Beim Einsatz des Ventilelementes 11 als Frostschutzregelventil ist der Arbeitspunkt des thermischen Stellgliedes 41 derart eingestellt, dass bei einem Abfall der Temperatur unter bspw. 4 °C eine Stellbewegung des thermischen Stellgliedes 41 angesteuert wird, um ein Abfließen der Flüssigkeit zu ermöglichen und um ein Gefrieren von der Flüssigkeit, vorzugsweise Wasser, in den Leitungen und/oder im Tank zu verhindern.

Ein vorstehend beschriebener Anwendungsfall wird nachfolgend beispielhaft näher beschrieben. In Figur 3 ist eine schematische Ansicht von oben auf eine Leitungsanordnung 61 dargestellt, welche in einer schematischen Seitenansicht gemäß Figur 46 ergänzend das Ventilelement 11 zeigt. Die Leitungsanordnung 61 gemäß Figur 3 weist einen Zulauf 64 auf, der über einen geradlinigen Rohrabschnitt 62 in einen Ablauf 74 übergeht. Zwischen dem Zulauf 64 und dem Ablauf 74 ist eine Querbohrung 91 vorgesehen, welche beispielsweise mit dem Rohrabschnitt 62 des Zu- und Ablaufes 64, 74 ein T-förmiges Leitungsstück bildet. Um die Querbohrung 91 herum ist ein Gehäuse 92 angeordnet, welches eine Ablassöffnung 94 aufweist. In dem Gehäuse 92 ist das Ventilelement 11 angeordnet, wobei das Ventilschließglied 14 des Ventilelementes 11 einen Ventilsitz 83 an der Querbohrung 91 öffnet und schließt. Das Ventilelement 11 umfasst den Übertragungsstift 16, der das Ventilschließglied 14 aufnimmt, und durchquert die Kammer 19 des Gehäuseabschnittes 18, wobei in der Kammer 19 das Kraftspeicherelement 29 angeordnet ist. Außerhalb des Gehäuseabschnitts 18 ist das thermische Stellglied 41 angeordnet. An dem Ventilelement 11 ist bei diesem Ausführungsbeispiel keine Betätigungseinrichtung 36 vorgesehen. Sofern diese Betätigungseinrichtung 36 vorgesehen ist, kann das thermische Stellglied 41 entfallen.

Das in den Figuren 3 und 4 dargestellte Ausführungsbeispiel ermöglicht einen Frostschutz in Leitungen und in Behältern zur Aufnahme von flüssigen Medien. Insbesondere kann eine solche Regeleinrichtung 12 bei Wohnwägen oder dergleichen vorgesehen sein. Über den Zulauf 64 wird Wasser entlang dem Rohrleitungsabschnitt 62 zum Ablauf 74 geführt. Bei Temperaturen oberhalb des Gefrierpunktes von beispielsweise Wasser schließt das Ventilelement 14 die Querbohrung 91 und sitzt im Ventilsitz 83. Sobald die Umgebungstemperatur unterhalb des Gefrierpunktes abfällt, wird diese Temperatur durch das thermische Stellglied 41 erfasst, da die Temperatur über die Ablassöffnung 94 auch in einem Innenraum des Gehäuses 92 vorherrscht. Die Druckkraft des thermischen Stellgliedes 41 nimmt ab, und die Rückstellkraft des Kraftspeicherelementes 29 überwiegt, so dass das Ventilschließglied 14 die Querbohrung 91 öffnet und ein in dem Rohrleitungsabschnitt 62 geführtes Wasser in den Innenraum des Gehäuses 92 und von dort aus über die Ablassöffnung 94 beispielsweise ins Freie gelangen kann. Dadurch wird sichergestellt, dass das in den Leitungen sich befindliche Wasser nicht gefriert.

Diese Anordnung weist neben der Sicherheitsfunktion "Frostschutz" eine weitere Sicherheitsfunktion "Überdruck" auf. Sofern beispielsweise in einem Leitungssystem sich kochendes Wasser befindet und dadurch ein Überdruck über einen vorbestimmten Leitungsdruck einstellt, kann dieser Überdruck gegen das thermische Stellglied 41 wirken und öffnet das Ventilschließglied 11, so dass wiederum ein Austreten des Wassers aus der Leitungsanordnung 61 über die Ablassöffnung 94 ermöglicht ist.

Die vorstehende Anordnung kann auch in Wasserbehältern für weitere Anwendungsbereiche eingesetzt werden.

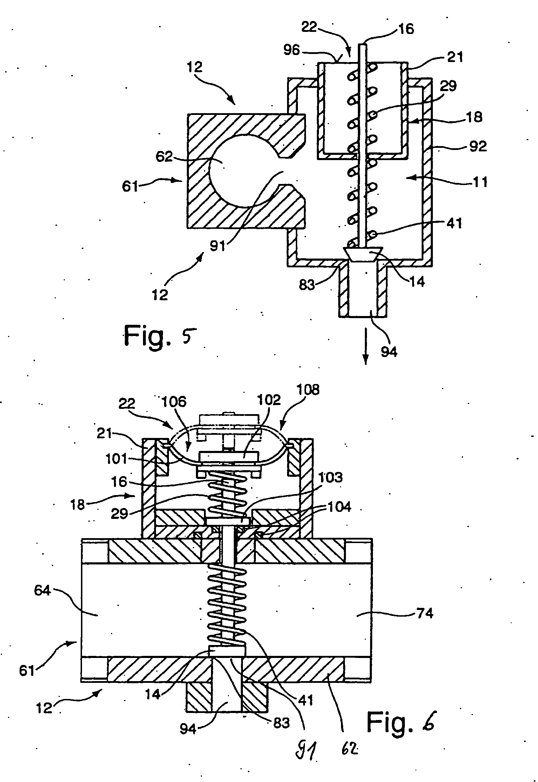

In Figur 5 ist eine alternative Ausführungsform zu Figur 4 dargestellt. Bei der in Figur 5 dargestellten Ausführungsform wird die Sicherheitsfunktion "Frostschutz" ermöglicht. Abweichend zu der Ausführungsform in Figur 6 ist das Ventilelement um 90° gedreht angeordnet und schließt die Ablassöffnung 94 bei Umgebungstemperaturen oberhalb des Gefrierpunktes. Das Ventilelement 11 ist bei dieser Ausführungsform dahingehend modifiziert, dass anstelle des zweiten Teils 22 des Gehäuseabschnitts 18 eine Druckmembran 96 vorgesehen ist, um bei einem Abfall der Temperaturen unterhalb des Gefrierpunktes zu ermöglichen, dass das Kraftspeicherelement 29 den Übertragungsstift 16 soweit abhebt, dass das Ventilschließglied 14 sich aus dem Ventilsitz 83 löst, um ein Abfließen des Mediums, insbesondere Wassers, aus dem Rohrabschnitt 82 über die Querbohrung 91 und Ablassöffnung 94 zu ermöglichen.

Bei dem Ausführungsbeispiel gemäß Figur 5 kann auch zusätzlich für die Sicherheitsfunktion "Überdruck" realisiert werden. In diesem Fall ist die wirksame Druckfläche der Druckmembran 96 größer ausgebildet als die Schließfläche des Ventilglieds 14 und der Gehäuseabschnitt 18 derart ausgebildet, dass der Überdruck im Gehäuse 92 gleichzeitig auch im Gehäuseabschnitt 18 vorliegt. Aufgrund der größeren Druckfläche der Druckmembran 96 als der des Ventilschließgliedes 14 kann bei einem Überdruck ebenfalls ein Öffnen des Ventilelementes 11 ermöglicht sein, dass bei einem vorliegenden Überdruck das Medium, insbesondere Wasser, über die Ablassöffnung 94 abströmen kann.

Bei beiden vorstehenden Ausführungsformen ist ermöglicht, dass die Ventilelemente 11 zum Gehäuse 92 durch einen schnell lösbaren Verschluss befestigt sind. Beispielsweise kann ein Bajonettverschluss oder Dreh- oder Rastverschluss vorgesehen sein. Alternativ ist vorgesehen, dass der Gehäuseabschnitt 18 zum Gehäuse 92 über eine Einstellvorrichtung in seiner Lage veränderbar ist. Beispielsweise kann eine Gewindeanordnung vorgesehen sein, um eine Einstellung des Ventilelementes 11 zur Querbohrung 91 beziehungsweise Ablassöffnung 94 zu ermöglichen und zum anderen, um das Ventilelement 11 von Hand zu bedienen. Dies kann beispielsweise der Fall sein, wenn eine Entleerung zum Wasserwechsel oder für Reinigungszwecke erfolgen soll.

In Figur 6 ist eine weitere alternative Ausführungsform zu Figur 4 dargestellt. Bei dieser Ausführungsform wird ebenfalls die Sicherheitsfunktion Frostschutz ermöglicht. Diese Ausführungsform gemäß Figur 6 weicht gegenüber Figur 4 als auch Figur 5 dahingehend ab, dass an einem Gehäuseabschnitt 18 ein Stellelement 101 vorgesehen ist, welches in zwei Schaltpositionen beziehungsweise Hubstellungen jeweils eine stabile Endlage aufweist. Das Stellelement 101 ist bevorzugt als Schnappfederelement ausgebildet, welches zwischen dem Übertragungsstift 16 und dem ersten Teil 21 des Gehäuseabschnitts 18 wirkt. Die Anordnung und Aufnahme des Stellelementes 101, welches beispielsweise auch als Tellerfeder ausgebildet sein kann, erfolgt bevorzugt durch eine Klemmung, Verrastung oder durch eine Positionierung des Außenumfangs und/oder des Innenumfangs in einer muldenförmigen Vertiefung. Dadurch ist auch eine einfache Montage dieses Stellelementes 101 gegeben, die am Gehäuse 18 und/oder an einer Aufnahme 102 am Ventilelement 11 vorgesehen sein kann.

Das Kraftspeicherelement 29 stützt sich mit einem Ende an der Aufnahme 102 ab, die am Übertragungsstift 16 positioniert ist und am gegenüberliegenden Ende beispielsweise an einer Scheibe 103. Diese Scheibe 103 kann auch entfallen, so dass das Kraftspeicherelement 29 unmittelbar an einem darunter liegenden Gehäuseabschnitt angreift. Die Aufnahme 102 ist gleichzeitig dazu geeignet, das Stellelement 101 aufzunehmen, wobei die Aufnahme 102 bevorzugt lösbar zum Übertragungsstift 16 vorgesehen ist, so dass ein einfacher Austausch des Stellelementes 101 ermöglicht ist. Die Aufnahme 102 umfasst beispielsweise eine umlaufende Vertiefung, an der ein Innenumfang des Stellelementes 101 angreift.

Der Übertragungsstift 16 durchquert bei dieser Ausführungsform beispielsweise die Leitungsanordnung 61 und schließt eine unmittelbar an der Leitungsanordnung 61 bzw. zwischen dem Zulauf 64 und dem Ablauf 74 abzweigende Ablassöffnung 94. Zur Dichtung der Leitungsanordnung 61 gegenüber dem Übertragungsstift 16 ist zumindest eine Dichtung 104 vorgesehen. Zusätzlich ist eine Dichtung 104 zwischen der Leitungsanordnung 61 und dem Gehäuseabschnitt 18 vorgesehen. Alternativ zu dieser Ausgestaltung kann das Stellelement 101 auch bei Anordnungen des Ventilelementes 11 gemäß den vorstehenden Figuren einsetzbar sein.

Das thermische Stellglied 41 ist in der Leitungsanordnung 61 vorgesehen. Bei einer Umgebungstemperatur von Luft oder Wasser > 4 °C, die auf das thermische Stellglied wirkt, ist das Ventilelement 11 in einer Schließposition, und das Ventilschließglied 14 schließt die Ablassöffnung 94, da bei dieser Temperatur eine Schließkraft durch das thermische Stellglied 41 erzeugt wird und die Schließkraft des thermischen Stellgliedes 41 größer als die Rückstellkraft des Kraftspeicherelementes 29 ist. Das Stellelement 101 ist in der Endlage 106 angeordnet. Sobald die Umgebungstemperatur von Luft oder Wasser < 4 °C wird, nimmt die Schließkraft des thermischen Stellglieds 41 ab, und die Kraft des Kraftspeicherelementes 29 überwiegt. Dadurch wird eine Stellbewegung auf das Stellelement 101 ausgeübt und das Stellelement 101 schlagartig aus der ersten Endlage 106 in eine zweite Endlage 108 übergeführt, welche strichliniert dargestellt ist. Dadurch wird ein schlagartiges Öffnen bzw. Abheben des Ventilschließgliedes 14 von der Ablassöffnung 94 erzielt, und das in der Leitungsanordnung 61 sich befindliche Medium kann über die Ablassöffnung 94 abfließen. Somit kann eine Frostschutzregelung ermöglicht werden, wobei sichergestellt ist, dass ein schnelles Öffnen und eine schnelle Einnahme der geöffneten Position des Ventilelementes 11 bzw. der zweiten Endlage 108 des Stellelementes 101 gegeben ist. Durch das Stellelement 101 werden die beiden Endlagen 106 und 108 auch bis zu einer bestimmten Stellkraft des Kraftspeicherelementes 29 und des thermischen Stellgliedes 41 selbst gehalten.

Sobald die Umgebungstemperaturwieder > 4 °C wird, überwiegt die Schließkraft des thermischen Stellgliedes 41, und das Ventilschließglied 14 wird in eine Schließposition zur Ablassöffnung 94 übergeführt, wodurch das Stellelement 101 wieder die Endlage 106 einnimmt. Alternativ zu dem dargestellten Stellelement 101 können auch mehrere solche Stellelemente 101 hintereinander geschalten werden, um die entsprechenden Endlagen 106 und 108 aufrecht zu erhalten oder schlagartig einzunehmen.

Alle vorbeschriebenen Merkmale sind jeweils für sich erfindungswesentlich und können beliebig miteinander kombiniert werden.

## Patentansprüche

1. Thermostatische Regeleinrichtung zur Regelung eines Massenstromes,
mit einer Leitungsanordnung (61), die einen Rohrabschnitt (62) umfasst und einen Zulauf (64) mit einem Ablauf (74) verbindet und dazwischen liegend eine Querbohrung (91) oder Ablauföffnung (94) aufweist,
- bei dem ein Ventilelement (11) mit einem Ventilschließglied (14) vorgesehen ist, welches einem Ventilsitz (83) zuordenbar ist, der an der Querbohrung (91) oder der Ablauföffnung (94) vorgesehen ist, und das durch einen Übertragungsstift (16) betätigbar ist, der in einem Gehäuseabschnitt (18) des Ventilelementes (11) zumindest abschnittsweise geführt ist, wobei in dem Gehäuseabschnitt (18) zumindest ein Kraftspeicherelement (29) vorgesehen ist, welches in eine erste Bewegurigsrichtung wirkt, so dass das Ventilschließglied (14) in einer Ausgangslage (28) zum Gehäuseabschnitt (18) angeordnet ist,
- bei dem das Ventilelement (11) zumindest ein thermisches Stellglied (41) aus einer Formgedächtnislegierung aufweist, welches sowohl an dem Gehäuseabschnitt (18) als auch an dem Ventilschließlied (14) oder Übertragungsstift (16) angreift und eine durch das Kraftspeicherelement (29) erzielte erste Bewegungsrichtung entgegengesetzte Wirkrichtung aufweist,
- bei dem das thermische Stellglied (41) eine temperaturabhängige Stellbewegung auf das Ventilschließglied (14) entgegen dem zumindest einen Kraftspeicherelement (29) bewirkt, so dass die Stellkraft des thermischen Stellgliedes (41) größer als die des zumindest einen Kraftspeicherelementes (29) ist und
- bei dem das Ventilschließglied (14) die Querbohrung (91) oder die Ablassöffnung (94) schließt, **dadurch gekennzeichnet,**
- **dass** der Gehäuseabschnitt (18) des Ventilelementes (11) ein Stellelement (101) aufweist, welches in zwei vordefinierten Endlagen (106, 108) anordenbar ist und
- **dass** das Stellelement (101) als Schnappfederelement ausgebildet ist, welches selbsthaltend in der jeweiligen Endlage (106, 108) angeordnet ist.

2. Thermostatische Regeleinrichtung nach Anspruch 1, **dadurch gekennzeichnet, dass** an einem dem Ventilschließglied (14) gegenüberliegenden Ende des Übertragungsstiftes (16) eine Betätigungsvorrichtung (36), insbesondere eine Temperaturregeleinrichtung oder ein Thermokopf, anbringbar ist.

3. The mostatische Regeleinrichtung nach Anspruch 1, **dadurch gekennzeichnet, dass** der Übertragungsstift (16) zumindest eine Kammer (19) in dem Gehäuseabschnitt (18) durchquert und dass in der zumindest einen Kammer (19) das Kraftspeicherelement (29) angeordnet ist, welches sich mit einem Ende am Kammerboden (31) und mit seinem anderen Ende am Übertragungsstift (16) abstützt.

4. Thermostatische Regeleinrichtung nach Anspruch 1, **dadurch gekennzeichnet, dass** der Übertragungsstift (16) in Führungsöffnungen (24) des Gehäuseabschnitts (18) geführt ist, die vorzugsweise ein Dichtungselement (26) aufnehmen.

5. Thermostatische Regeleinrichtung nach Anspruch 1, **dadurch gekennzeichnet, dass** auf dem Gehäuseabschnitt (18) eine Einstellhülse (49) vorgesehen ist, welche in axialer Richtung zum Gehäuseabschnitt (18) einstellbar ist.

6. Thermostatische Regeleinrichtung nach Anspruch 1, dadurch gekenr zeichnet, dass der Gehäuseabschnitt (18), das Ventlischließglied (14), der Übertragungsstift (16), das in dem Gehäuseabschnitt (18) angeordnete Kraftspeicherelement (29) und das thermische Stellglied (41) eine Baueinheit bilden und als Einbaupatrone ausgebildet sind.

7. Thermostatische Regeleinrichtung nach Anspruch 1, **dadurch gekennzeichnet, dass** zwischen dem Gehäuseabschnitt (18) und dem Ventilschließglied (14) eine Spannelement (44) vorgesehen ist, das in axialer Richtung entlang des Übertragungsstiftes (16) einstellbar und vorzugsweise lösbar zum Übertragungsstift (16) oder Ventilschleßglied (14) vorgesehen ist.

8. The mostatische Regeleinrichtung nach Anspruch 1, **dadurch gekennzeichnet, dass** das thermische Stellglied (41) auf einen Arbeitspunkt einstellbar ist, welcher bei Frost eine Öffnungsbewegung des Ventilschließgliedes (14) bewirkt.

9. Thermostatische Regeleinrichtung nach Anspruch 1, **dadurch gekennzeichnet, dass** die Stellkraft des Stellelementes (101) derart ausgebildet ist, dass das Stellelement (101) bei einer Umgebungsterr peratur von Luft oder Wasser, die auf das thermische Stellglied (41) wirkt, von weniger als 4 °C durch das Kraftspeicherelement (29) in die zweite Endlage (108) überführbar ist, in der das Ventilelement (11) die Ablassöffnung (94) öffnet, und bei einer Umgebur gstemperatur von mehr als 4 °C das Stellelement (101) durch das thermische Stellglied (41) in die erste Endlage (106) überführbar ist, in der das Ventilelement (11) die Ablassöffnung (94) schließt.

## Claims

1. A thermostatic control device for regulating a mass flow,
having a pipe arrangement (61) which comprises a pipe portion (62) and connects a flow pipe (64) with an outlet pipe (74) and has a cross hole (91) or a discharge opening (94) lying there between,
- on which a valve member (11) having a valve closure member (14) is provided which is arranged in a valve seat (83) and is actuated by a transmission pin (16), a body portion (18) in which the transmission pin (16) is at least partially guided, and at least one energy storing member (29) which is provided in the body portion (18) and acts in a first direction of movement, such that the valve closure member (14) is arranged in a normal position (28) with respect to the body portion (18).
- on which the valve member (11) provides at least one thermal actuator (41) made of a shape memory alloy, which is applied to both the body portion (18) and the valve closure member (14) or transmission pin (16) and has a direction of action through the energy storing member (29) that opposes said first direction of movement,
- on which the thermal actuator (41) causes a temperature-depending actuating movement to be exerted on the valve closure member (14) against the at least one energy storing member (29), such that the actuating force of the thermal actuator (41) is greater than that of the at least one energy storing member (29) and
- on which the valve closure member (14) closes the cross hole (91) or the discharge opening (94), **characterized by**,
- that the body portion (18) of the valve member (11) has an actuating member (101) which is arranged in either of two predefined end positions (106, 108) and
- that the actuating member (101) is realised as a catch spring member which is arranged in a locking manner in the respective end position (106, 108).

2. The thermostatic control device as claimed in claim 1, **characterised in that** on an end of the transmission pin (16) opposing the valve closure member (14) an actuating device (36), in particular a temperature regulating device or a thermal head, is fastened.

3. The thermostatic control device as claimed in claim 1, **characterised in that** the transmission pin (16) traverses at least one chamber (19) formed in the body portion (18) and that in the at least one chamber (19) the energy storing member (29) is arranged which abuts with one end on the chamber bottom (31) and with its other end on the transmission pin (16).

4. The thermostatic control device as claimed in claim 1, **characterised in that** the transmission pin (16) is guided in guide openings (24) of the body portion (18) which preferably accommodate a sealing member (26).

5. The thermostatic control device as claimed in claim 1, **characterised in that** on the body portion (18) an adjusting sleeve (49) is provided which is adjustable in an axial direction with respect to the body portion (18).

6. The thermostatic control device as claimed in claim 1, **characterised in that** the body portion (18), the valve closure member (14), the transmission pin (16), the energy storing member (29) arranged in the body portion (18), and the thermal actuator (41) form a modular unit and are realised in the form of a built-in cartridge.

7. The thermostatic control device as claimed in claim 1, **characterised in that** between the body portion (18) and the valve closure member (14) a tensioning member (44) is provided which is adjustable in an axial direction along the transmission pin (16) and preferably detechable to the transmission pin (16) or the valve closure member (14).

8. The thermostatic control device as claimed in claim 1, **characterised in that** the thermal actuator (41) is adjusted so as to have an operating point which causes an opening movement of the valve closure member (14) when the temperature falls below the freezing point.

9. The thermostatic control device as claimed in claim 1, **characterised in that** the actuating force of the actuating member (101) is such that when an ambient temperature of air or water acting on the thermal actuator (41) is lower than 4 °C the actuating member (101) is moved by the energy storing member (29) to the second end position (108) in which preferably the valve member (11) opens the discharge opening (94), and that when an ambient temperature is higher than 4 °C the actuating member (101) is moved by the thermal actuator (41) to the first end position (106) in which the valve member (11) closes the discharge opening (94).

## Revendications

1. Dispositif de régulation thermostatique destiné à réguler un flux massique
avec une disposition de tuyaux (61) qui comprend un tronçon de tuyauterie (62) et relie un tuyau d'amenée (64) à un tuyau d'évacuation (74) et qui présente, entre ces derniers, un alésage transversal (91) ou un orifice d'évacuation (94)
- dans lequel est prévu un élément de soupape (11) pourvu d'un organe de fermeture de soupape (14) lequel peut être affecté à un siège de soupape (83) prévu au niveau de l'alésage transversal (91) ou de l'orifice d'évacuation (94) et lequel peut être actionné par une tige de transmission (16) qui est guidée au moins partiellement dans une partie de corps (18) de l'élément de soupape (11), dans ladite partie de corps (18) étant prévu au moins un élément accumulateur d'énergie (29) qui agit dans un premier sens de déplacement de sorte que l'organe de fermeture de soupape (14) est disposé dans une position initiale (28) par rapport à la partie de corps (18),
- dans lequel l'élément de soupape (11) présente au moins un organe de réglage thermique (41) réalisé en un alliage à mémoire de forme, lequel appuie non seulement contre la partie de corps (18) mais aussi contre l'organe de fermeture de soupape (14) ou contre la tige de transmission (16) et qui présente un sens d'action allant à l'opposé d'un premier sens de déplacement réalisé par l'élément accumulateur d'énergie (29),
- dans lequel l'organe de réglage thermique (41) provoque, en fonction de la température, un mouvement de réglage au niveau de l'organe de fermeture de soupape (14) allant à l'opposé dudit au moins un élément accumulateur d'énergie (29) de sorte que la puissance de réglage de l'organe de réglage thermique (41) est supérieure à celle dudit au moins un élément accumulateur d'énergie (29) et
- dans lequel l'organe de fermeture de soupape (14) ferme l'alésage transversal (91) ou l'orifice d'évacuation (94), **caractérisé en ce que**
- la partie de corps (18) de l'élément de soupape (11) présente un élément de réglage (101) qui peut être disposé dans deux positions finales prédéfinies (106, 108) et
- l'élément de réglage (101) est réalisé sous forme d'élément à ressort à déclic qui est disposé de sorte à se maintenir de manière verrouillée dans la position finale respective (106, 108).

2. Dispositif de régulation thermostatique selon la revendication 1, **caractérisé en ce qu'**un dispositif d'actionnement (36), notamment un dispositif régulateur de température ou une tête thermique, peut être monté à une extrémité de la tige de transmission (16) située à l'opposé de l'organe de fermeture de soupape (14).

3. Dispositif de régulation thermostatique selon la revendication 1, **caractérisé en ce que** la tige de transmission (16) traverse au moins une chambre (19) située dans la partie de corps (18) et **en ce que** dans ladite au moins une chambre (19) est disposé l'élément accumulateur d'énergie (29) qui s'appuie avec une extrémité contre le fond de chambre (31) et avec son autre extrémité contre la tige de transmission (16).

4. Dispositif de régulation thermostatique selon la revendication 1, **caractérisé en ce que** la tige de transmission (16) est guidée dans des ouvertures de guidage (24) de la partie de corps (18) lesquelles reçoivent de préférence un élément d'étanchéité (26).

5. Dispositif de régulation thermostatique selon la revendication 1, **caractérisé en ce que** sur la partie de corps (18) est prévue une douille de réglage (49) qui est réglable en sens axial par rapport à la partie de corps (18).

6. Dispositif de régulation thermostatique selon la revendication 1, **caractérisé en ce que** la partie de corps (18), l'organe de fermeture de soupape (14), la tige de transmission (16), l'élément accumulateur d'énergie (29) disposé dans la partie de corps (18) et l'organe de réglage thermique (41) forment un bloc fonctionnel et sont réalisés sous forme de cartouche à encastrer.

7. Dispositif de régulation thermostatique selon la revendication 1, **caractérisé en ce qu'**entre la partie de corps (18) et l'organe de fermeture de soupape (14) est prévu un élément tendeur (44) qui est réglable en sens axial le long de la tige de transmission (16) et qui est prévu de préférence de manière amovible par rapport à la tige de transmission (16) ou à l'organe de fermeture de soupape (14).

8. Dispositif de régulation thermostatique selon la revendication 1, **caractérisé en ce que** l'organe de réglage thermique (41) est réglable sur un point de fonctionnement qui provoque, en cas de gel, un mouvement d'ouverture de l'organe de fermeture de soupape (14).

9. Dispositif de régulation thermostatique selon la revendication 1, **caractérisé en ce que** la puissance de réglage de l'élément de réglage (101) est conçue de manière telle que l'élément de réglage (101), lorsque la température ambiante de l'air ou de l'eau agissant sur l'organe de réglage thermique est inférieure à 4 °C, peut être déplacé par l'élément accumulateur d'énergie (29) dans la deuxième position finale (108) dans laquelle l'élément de soupape (11) ouvre l'orifice d'évacuation (94) et, lorsque la température ambiante est supérieure à 4 °C, l'élément de réglage (101) peut être déplacé par l'organe de réglage thermique (41) dans la première position finale (106) dans laquelle l'élément de soupape (11) ferme l'orifice d'évacuation (94)
